# EUROPEAN PATENT APPLICATION

(11) **EP 4 782 389 A1**
(43) Date of publication of application: **29.07.2026**
(21) Application number: 24921177.2
(22) Date of filing: 16.04.2024
(51) Int. Cl.: B66F 11/00

(54) **LIFT MACHINE, BATTERY PRODUCTION LINE, AND LIFT METHOD**

(30) Priority: 29.01.2024 CN 202410115999
(71) Applicant: Contemporary Amperex Technology Co., Limited, Ningde, Fujian 352100 (CN)
(72) Inventor: LIU, Fusheng, Ningde, Fujian 352100 (CN); ZHANG, Shuming, Ningde, Fujian 352100 (CN); ZUO, Wentao, Ningde, Fujian 352100 (CN); YANG, Baolin, Ningde, Fujian 352100 (CN)
(74) Representative: Lorenz Seidler Gossel Part. mbB
(86) International application number: PCT/CN2024/088008
(87) International publication number: WO 2025/161133

(57) **Abstract**

A lifter includes at least two lifting mechanisms (2). At least one of the lifting mechanisms (2) is configured to perform a lifting operation for lifting a component to be transferred (100), and at least one of the lifting mechanisms (2) is configured to perform a lowering operation for lowering the component to be transferred (100). The lifting operation and the lowering operation are able to be performed simultaneously. The lifting mechanism (2) includes a power assembly and a carrier assembly (22). The carrier assembly (22) is connected to the power assembly, and the power assembly is capable of driving the carrier assembly (22) to ascend or descend. The carrier assembly (22) includes a plurality of rollers (221) capable of rotating independently. Tops of the plurality of rollers (221) are configured to carry the component to be transferred (100). Through the rollers (221) rotating in the same direction, the component to be transferred (100) is able to move along a direction perpendicular to rotation axes of the rollers (211) while maintaining contact with the tops of the rollers (221). A battery production line includes the lifter, a manufacturing machine (1000) for manufacturing battery components, and a battery assembly device (2000) for assembling batteries using the battery components. A lifting method includes: a feeding step of inputting the component to be transferred (100) onto the rollers of the lifting mechanism (2) for performing the lifting operation, and inputting another component to be transferred (100) onto the rollers of the lifting mechanism (2) for performing the lowering operation; and a lifting step of using the lifting mechanism (2) for performing the lifting operation to lift the carried component to be transferred (100), and using the lifting mechanism (2) for performing the lowering operation to lower the carried component to be transferred (100). With this configuration, the lifting operation and the lowering operation are able to be performed simultaneously, enabling concurrent handling of lifting and lowering trays, achieving bidirectional transfer and high transfer efficiency.

## Description

### CROSS-REFERENCE TO RELATED APPLICATIONS

This disclosure is based on and claims priority to Chinese Patent Application No. 202410115999.8, filed on January 29, 2024, entitled "LIFTER, BATTERY PRODUCTION LINE, AND LIFTING METHOD," which is incorporated herein by reference in its entirety.

### TECHNICAL FIELD

This disclosure relates to the technical field of battery manufacturing, and in particular, to a lifter, a battery production line, and a lifting method.

### BACKGROUND

The application of new energy batteries in daily life and industry is becoming increasingly widespread. For example, new energy vehicles equipped with batteries have been widely used, and batteries are also increasingly applied in energy storage fields and the like.

In the battery manufacturing process, a lifter is used to lift or lower trays for transferring bare battery cells, enabling the transfer of trays between conveyor lines at different heights, thereby facilitating the transfer of bare battery cells. The speed at which the lifter lifts or lowers the trays affects the efficiency of battery formation. Therefore, increasing the transfer speed of the lifter is a critical factor in improving battery production efficiency.

Additionally, simplifying the structure of the lifter is an effective means to reduce cost investment. Thus, how to simplify the structure of the lifter while increasing the transfer speed of the lifter is one of the topics studied in the industry.

### SUMMARY

To address the above technical problems, this disclosure provides a lifter, a battery production line, and a lifting method for increasing transfer speed and simplifying structure.

This disclosure is implemented through the following technical solutions.

A first aspect of this disclosure provides a lifter. The lifter includes at least two lifting mechanisms, at least one of the lifting mechanisms being configured to perform a lifting operation for lifting a component to be transferred, at least one of the lifting mechanisms being configured to perform a lowering operation for lowering a component to be transferred, and the lifting operation and the lowering operation being able to be performed simultaneously. The lifting mechanism includes a power assembly and a carrier assembly, the carrier assembly being connected to the power assembly, and the power assembly being capable of driving the carrier assembly to ascend or descend. The carrier assembly includes a plurality of rollers capable of rotating independently, tops of the plurality of rollers being configured to carry the component to be transferred. Through the rollers rotating in a same direction, the component to be transferred is able to move in a direction perpendicular to a rotation axis of the rollers while contacting the tops of the rollers. The carrier assembly further includes a mounting member, the mounting member being connected to an output end of the power assembly, and the power assembly being capable of driving the mounting member to ascend or descend; and a plurality of one-way rotation connectors, where the one-way rotation connectors are individually mounted on the mounting member, the rollers are connected to the one-way rotation connectors in a one-to-one correspondence, and the roller is capable of rotating in one direction relative to the mounting member through the one-way rotation connector.

When the lifter provided by the embodiments of this disclosure is applied to the section of transferring trays in the battery production process, empty trays not carrying bare battery cells are lifted or lowered by one lifting mechanism, while loaded trays carrying bare battery cells are lowered or lifted by another lifting mechanism, thereby achieving tray transfer to facilitate the transport of bare battery cells. The lifting and lowering operations are able to be performed simultaneously, enabling simultaneous lifting and lowering of trays, achieving bidirectional transfer with high transfer efficiency.

When a tray moves toward the rollers of the carrier assembly, the tray has a certain initial velocity. During the process of the tray initially contacting the rollers, the rolling friction between the tray and the rollers causes the rollers to start rotating, and the rotation of the rollers can drive the tray to continue moving forward, allowing the tray to maintain movement for a longer period and move into position without the need for a pushing mechanism. This eliminates the pushing mechanism, simplifying the structure of the lifter, and also saves the time consumed by the full-length pushing step of the pushing mechanism, thereby reducing the time for the tray to enter the lifter and further improving the transfer efficiency of the lifter.

The one-way rotation connectors allow the rollers to rotate in only one direction. During the process of the component to be transferred entering the carrier assembly, the component to be transferred drives the rollers to rotate in one direction, and the tangential component of the velocity at the top of the rollers matches the moving speed of the component to be transferred, facilitating the continued forward movement of the component to be transferred. Since the rollers cannot rotate in the opposite direction, when the component to be transferred moves into position and is stopped, the rollers do not rotate backward, preventing the component to be transferred from rebounding, thereby improving the stability of movement of the component to be transferred.

In some embodiments, the mounting member includes two mounting plates arranged oppositely along a first direction. A plurality of the rollers, spaced along a second direction, are mounted on mutually facing sides of the two mounting plates, where the first direction, the second direction, and the vertical direction being mutually perpendicular to each other. Mutually facing surfaces of the two mounting plates and the tops of the plurality of rollers define a receiving space for accommodating the component to be transferred.

The two opposing mounting plates allow the rollers mounted on the two opposing mounting plates to support opposite ends of the bottom of the component to be transferred, thereby stably carrying the component to be transferred. Additionally, the two mounting plates are spaced apart in the first direction, allowing the component to be transferred to move into the receiving space along the second direction without obstruction, improving the ease of entry of the component to be transferred into the lifter. Furthermore, the receiving space has mounting plates on its opposite sides, and the mutually facing surfaces of the two mounting plates provide a limiting effect on the component to be transferred, enhancing the stability of the carrier assembly in carrying the component to be transferred.

In some embodiments, the one-way rotation connectors include one-way bearings.

The one-way bearings allow the rollers to rotate in only one direction relative to the mounting plates, preventing the component to be transferred from rebounding after moving into position.

In some embodiments, the rollers include rubber-coated rollers.

The rubber-coated rollers increase the friction between the rollers and the component to be transferred, enhancing the interaction effect between the rubber-coated rollers and the component to be transferred, thereby improving the efficiency of the component to be transferred entering the receiving space. Additionally, the increased friction further prevents the component to be transferred from rebounding when the component to be transferred is stopped.

In some embodiments, the power assembly includes: a first drive member; and a transmission assembly connected to an output end of the first drive member, the mounting plates being connected to the transmission assembly. The first drive member is capable of driving the two opposing mounting plates to ascend or descend synchronously through the transmission assembly.

The first drive member is capable of driving the two opposing mounting plates to ascend or descend synchronously through the transmission assembly, thereby enabling the component to be transferred, which is carried on the rollers mounted on the mounting plates to ascend or descend smoothly.

In some embodiments, the transmission assembly includes a first belt transmission assembly and a second belt transmission assembly. The two opposing mounting plates are respectively connected to the first belt transmission assembly and the second belt transmission assembly. The first drive member is capable of driving the first belt transmission assembly and the second belt transmission assembly to move simultaneously to drive the two opposing mounting plates to ascend or descend synchronously.

The two belt transmission assemblies respectively drive the two mounting plates to ascend or descend synchronously, achieving the lifting or lowering of the component to be transferred. By using belt transmission, the belts are less likely to stretch, preventing impact on the accuracy of the lifting position, thereby improving the precision of the lifter in controlling the lifting position of the component to be transferred.

In some embodiments, the transmission assembly further includes a rotation transmission assembly. Both ends of the rotation transmission assembly are respectively connected to the first belt transmission assembly and the second belt transmission assembly, and the rotation transmission assembly is capable of transmitting the motion of the first belt transmission assembly to the second belt transmission assembly.

Thus, a single first drive member can simultaneously drive the two transmission assemblies, eliminating the need for an additional drive member, further simplifying the structure of the lifter and reducing cost investment.

In some embodiments, the first belt transmission assembly includes: a first rotation shaft, the first drive member being drivingly connected to the first rotation shaft; a first driving synchronous wheel mounted on the first rotation shaft and configured to rotate synchronously with the first rotation shaft; a first mounting shaft, the first mounting shaft and the first rotation shaft being spaced apart in the vertical direction; a first driven synchronous wheel mounted on the first mounting shaft and configured to rotate about the first mounting shaft; and a first synchronous belt wound around the first driving synchronous wheel and the first driven synchronous wheel. A plurality of the mounting plates spaced equidistantly along a belt extension direction are provided on an outer side of the first synchronous belt.

The second belt transmission assembly includes: a second rotation shaft, both ends of the rotation transmission assembly respectively being connected to the first rotation shaft and the second rotation shaft; a second driving synchronous wheel mounted on the second rotation shaft and configured to rotate synchronously with the second rotation shaft; a second mounting shaft, the second mounting shaft and the second rotation shaft being spaced apart in the vertical direction; a second driven synchronous wheel mounted on the second mounting shaft and configured to rotate about the second mounting shaft; and a second synchronous belt wound around the second driving synchronous wheel and the second driven synchronous wheel. A plurality of the mounting plates spaced equidistantly along a belt extension direction are provided on an outer side of the second synchronous belt.

Thus, the mounting plates connected to the first synchronous belt and the mounting plates connected to the second synchronous belt ascend or descend synchronously, enabling the carrier assembly to ascend or descend smoothly. Additionally, since both the first synchronous belt and the second synchronous belt are connected with multiple equidistantly spaced mounting plates, during the transmission of the first and second synchronous belts, the multiple mounting plates on the same synchronous belt ascend or descend sequentially at a uniform pace, thereby improving the transfer efficiency of the component to be transferred.

In some embodiments, the rotation transmission assembly includes: a first right-angle connector, a power input end of the first right-angle connector being connected to the first rotation shaft; a connecting shaft, one end of the connecting shaft being connected to the power output end of the first right-angle connector; and a second right-angle connector, a power input end of the second right-angle connector being connected to another end of the connecting shaft, and a power output end of the second right-angle connector being connected to the second rotation shaft.

The arrangement of the first right-angle connector, the connecting shaft, and the second right-angle connector enables the transmission of the rotation of the first rotation shaft to the second rotation shaft, with a simple structure for the rotation transmission assembly and low cost investment.

In some embodiments, the first right-angle connector and the first rotation shaft are connected by a male-female fit; and the second right-angle connector and the second rotation shaft are connected by a clamping mechanism.

The male-female fit ensures a secure connection between the first right-angle connector and the first rotation shaft. The clamping mechanism allows for adjusting the angle of the second rotation shaft during the connection of the second right-angle connector and the second rotation shaft, with clamping applied once the proper alignment is achieved. This enables adjustment of the installation angle of the second driving synchronous wheel by adjusting the angle of the second rotation shaft, ensuring that the installation angles of the second driving synchronous wheel and the first driving synchronous wheel are the same, so that the first synchronous belt and the second synchronous belt are completely aligned in the first direction. Consequently, the mounting plates connected to the first synchronous belt and the second synchronous belt are completely aligned in the first direction, ensuring that the receiving space is in a horizontal plane, thereby improving the stability of carrying the component to be transferred.

In some embodiments, the component to be transferred includes an empty tray not carrying an object or a loaded tray carrying an object, the object including a battery component. The lifting mechanism for performing the lifting operation is used to lift the loaded tray, and the lifting mechanism for performing the lowering operation is used to lower the empty tray; or the lifting mechanism for performing the lifting operation is used to lift the empty tray, and the lifting mechanism for performing the lowering operation is used to lower the loaded tray.

The lifter provided by this embodiment is applied to the transport operation of battery components, and the battery components include bare battery cells and other components used to form battery cells. The structure of the lifter is simplified, reducing the cost of transferring battery components, and improving the transfer efficiency of battery components, thereby improving the manufacturing cost and improving the manufacturing efficiency of battery cells.

In some embodiments, each of the lifting mechanisms has input portions and output portions spaced apart in the vertical direction, where a pushing mechanism is provided corresponding to each of the output portions, and the pushing mechanism is capable of extending along the second direction into the receiving space that has moved to the output portion to push the component to be transferred out of the receiving space.

The pushing mechanism is configured to push the component to be transferred, which has been lifted or lowered to the output portion, out of the receiving space and out of the lifting mechanism, facilitating the entry into the next process of the component to be transferred.

In some embodiments, the pushing mechanism includes: a pushing mounting seat; a second drive member mounted on the pushing mounting seat; a telescopic mounting seat connected to an output end of the second drive member, the second drive member being capable of driving the telescopic mounting seat to move reciprocally along the second direction; a third drive member mounted on the telescopic mounting seat; and a pushing member connected to an output end of the third drive member, the third drive member being capable of driving the pushing member to move reciprocally along the vertical direction, where the third drive member drives the pushing member to descend to a side area adjacent to the receiving space at the output portion, and the second drive member drives the pushing member to move along the second direction into the receiving space at the output portion to push the component to be transferred out of the receiving space.

During the process of pushing the component to be transferred, the third drive member drives the pushing member to descend to the side area adjacent to the receiving space at the output portion, and the second drive member drives the pushing member to move along the second direction into the receiving space at the output portion, pushing the component to be transferred out of the receiving space and out of the lifting mechanism, facilitating the entry into the next process of the component to be transferred. The pushing mechanism has a simple structure, low cost, and is easy to operate.

In some embodiments, the pushing member includes: a main body portion connected to the output end of the third drive member; and two pushing portions respectively connected to both ends of the bottom of the main body portion, where the pushing portion includes a pushing surface for abutting against and pushing the component to be transferred.

Thus, the two pushing portions simultaneously abut against and push the component to be transferred, improving the stability of pushing and preventing tilting of the component to be transferred.

In some embodiments, an output mechanism is provided corresponding to each of the output portions. The output mechanism has a conveying path extending along the second direction. The conveying path of the output mechanism is arranged close to the output portion corresponding to the output mechanism. The pushing mechanism corresponding to the output portion is capable of pushing the component to be transferred at the output portion to the conveying path of the output mechanism corresponding to the output portion.

The output mechanism, cooperating with the pushing mechanism, is capable of outputting the component to be transferred from the lifter after the component to be transferred is lifted or lowered into portion, further improving the transfer function of the lifter for the component to be transferred.

In some embodiments, an input mechanism is provided corresponding to each of the input portions, the input mechanism being capable of inputting the component to be transferred along the second direction into the receiving space that has moved to the input portion.

The input mechanism is configured to feed the component to be transferred from outside the lifter into the receiving space of the lifter, improving the transfer function of the lifter for the component to be transferred.

In some embodiments, the input mechanism has a conveying path extending along the second direction, the conveying path of the input mechanism being arranged close to the input portion corresponding to the input mechanism.

The input mechanism conveys the component to be transferred close to the input portion of the lifting mechanism. When partially contacting the rollers, the component to be transferred drives the rollers to rotate, and the tangential component of the velocity at the top of the rollers matches the moving speed of the component to be transferred. Therefore, after the component to be transferred completely detaches from the input mechanism, the interaction between the rollers and the component to be transferred facilitates the continued forward movement of the component to be transferred, allowing the component to be transferred to move forward into position. The component to be transferred can move into position through interaction with the rollers. This eliminates the need for a pushing mechanism to push the component to be transferred forward throughout the process, simplifying the structure of the lifter, saving costs, and allowing the component to be transferred to enter more efficiently by eliminating the full-length pushing step of the pushing mechanism, thereby enhancing transfer efficiency.

A second aspect of this disclosure provides a battery production line, including: a manufacturing machine, the manufacturing machine being configured to manufacture battery components; a battery assembly device configured to assemble batteries using the battery components; and the lifter described above. At least one of the lifting mechanisms of the lifter performs a lifting operation or a lowering operation on a loaded tray carrying the battery components to transfer the loaded tray to the battery assembly device, and at least one of the lifting mechanisms of the lifter performs a lowering operation or a lifting operation on an empty tray removed from the battery assembly device to transfer the empty tray to the manufacturing machine.

The battery production line provided by the embodiments of this disclosure includes the above-described lifter. Due to the simplified structure and improved transfer efficiency of the lifter, the structure of the battery production line provided by the embodiments of this disclosure is simplified, and the battery production efficiency is improved.

A third aspect of this disclosure provides a lifting method, where a lifter is used to lift a plurality of components to be transferred and lower another plurality of components to be transferred. The lifter includes at least two lifting mechanisms, at least one of the lifting mechanisms being configured to perform a lifting operation for lifting a component to be transferred, at least one of the lifting mechanisms being configured to perform a lowering operation for lowering a component to be transferred, and the lifting operation and the lowering operation being able to be performed simultaneously. The lifting mechanism includes a power assembly and a carrier assembly, the carrier assembly being connected to the power assembly, and the power assembly being capable of driving the carrier assembly to ascend or descend. The carrier assembly includes a plurality of rollers, tops of the plurality of rollers being configured to carry the component to be transferred. Through the rollers rotating in a same direction, the component to be transferred is able to move in a direction perpendicular to a rotation axis of the rollers while contacting the tops of the rollers. The carrier assembly further includes: a mounting member, the mounting member being connected to an output end of the power assembly, and the power assembly being capable of driving the mounting member to ascend or descend; and a plurality of one-way rotation connectors, where the one-way rotation connectors are individually mounted on the mounting member, rollers are connected to the one-way rotation connectors in a one-to-one correspondence, and the roller is capable of rotating in one direction relative to the mounting member through the one-way rotation connector.

The lifting method includes:
a feeding step: inputting a component to be transferred onto the rollers of the lifting mechanism for performing the lifting operation, and inputting another component to be transferred onto the roller of the lifting mechanism for performing the lowering operation; and
a lifting step: causing the lifting mechanism for performing the lifting operation to lift the carried component to be transferred, and causing the lifting mechanism for performing the lowering operation to lower the carried component to be transferred.

When the lifting method provided by the embodiments of this disclosure is applied to transferring trays in the battery production process, empty trays not carrying bare battery cells are lifted or lowered by one lifting mechanism, while loaded trays carrying bare battery cells are lowered or lifted by another lifting mechanism, thereby achieving tray transfer to facilitate the transport of bare battery cells. The lifting and lowering operations are able to be performed simultaneously, enabling simultaneous lifting and lowering of trays, achieving bidirectional transfer with high transfer efficiency.

When a tray moves toward the rollers of the carrier assembly, the tray has a certain initial velocity. During the process of the tray initially contacting the rollers, the rolling friction between the tray and the rollers causes the rollers to start rotating, and the rotation of the rollers can drive the tray to continue moving forward, allowing the tray to maintain movement for a longer period and move into position without the need for a pushing mechanism. This eliminates the pushing mechanism, simplifying the structure of the lifter, and also saves the time consumed by the full-length pushing step of the pushing mechanism, thereby reducing the time for the tray to enter the lifter and further improving the transfer efficiency of the lifter.

In some embodiments, each of the lifting mechanisms has input portions and output portions spaced apart in the vertical direction, with an input mechanism provided corresponding to each input portion.

The feeding step includes:
a placing step: placing the component to be transferred at an input end of the input mechanism;
a conveying step: conveying the component to be transferred to an output end of the input mechanism by the input mechanism; and
a transfer step: conveying the component to be transferred at the output end of the input mechanism onto the rollers of the carrier assembly by the input mechanism.

Thus, the input mechanism feeds the component to be transferred from outside the lifter into the receiving space of the lifter, improving the transfer function of the lifter for the component to be transferred.

In some embodiments, the component to be transferred includes an empty tray not carrying an object or a loaded tray carrying an object, the object including a battery component. In the lifting step, the lifting mechanism for performing the lifting operation lifts the carried loaded tray, and the lifting mechanism for performing the lowering operation lowers the carried empty tray; or the lifting mechanism for performing the lifting operation lifts the carried empty tray, and the lifting mechanism for performing the lowering operation lowers the carried loaded tray.

The lifting method provided by this embodiment is applied to the transport of battery components. The battery components include bare battery cells and other components used to form battery cells. The structure of the lifter is simplified, reducing the cost of transferring battery components, and the lifting method improves the transfer efficiency of battery components, thereby improving the manufacturing cost and improving the manufacturing efficiency of battery cells.

In some embodiments, after the lifting step, the method further includes:
a discharging step: pushing, by the lifting mechanism for performing the lifting operation, the component to be transferred that has been lifted into position off the rollers and out of the lifting mechanism, and pushing, by the lifting mechanism for performing the lowering operation, the component to be transferred that has been lowered into position off the rollers and out of the lifting mechanism.

After moving into position, the component to be transferred is moved out of the lifting mechanism, further improving the transfer function of the lifter for the component to be transferred.

In some embodiments, each of the lifting mechanisms has input portions and output portions spaced apart in the vertical direction, with a pushing mechanism and an output mechanism provided corresponding to each of the output portions.

The discharging step includes:
a pushing step of, when the carrier assembly moves to the output portion, pausing the driving of the power assembly, and causing the pushing mechanism to push the component to be transferred in the receiving space of the carrier assembly to a conveying path of the output mechanism; and
an output step of using the output mechanism to convey the component to be transferred out of the lifting mechanism.

The output mechanism, cooperating with the pushing mechanism, is capable of outputting the component to be transferred from the lifter after the component to be transferred is lifted or lowered into position, further improving the transfer function of the lifter for the component to be transferred.

### Effects of the invention

Through this disclosure, a lifter, a battery production line, and a lifting method are provided for increasing the transfer speed of bare battery cells and simplifying the structure.

### BRIEF DESCRIPTION OF DRAWINGS

By reading the detailed description of the preferred embodiments below, various other advantages and benefits will become apparent to those of ordinary skill in the art. The drawings are only for the purpose of illustrating the preferred embodiments and are not considered to limit this disclosure. Throughout the drawings, the same reference numerals denote the same components. In the drawings:
FIG. 1 is a schematic structural diagram of a lifter according to some embodiments of this disclosure;
FIG. 2 is a schematic partial structural diagram of a lifter according to some embodiments of this disclosure;
FIG. 3 is a schematic partial structural diagram of a carrier assembly according to some embodiments of this disclosure;
FIG. 4 is a schematic perspective structural diagram of a partial structure of a carrier assembly according to some embodiments of this disclosure;
FIG. 5 is a cross-sectional view at A-A in FIG. 2;
FIG. 6 is a cross-sectional view at B-B in FIG. 2;
FIG. 7 is a schematic perspective structural diagram of a pushing mechanism according to some embodiments of this disclosure;
FIG. 8 is a schematic partial structural diagram at an output mechanism of a lifter according to some embodiments of this disclosure;
FIG. 9 is a schematic structural diagram of a battery production line according to some embodiments of this disclosure;
FIG. 10 is a partial flowchart of a lifting method according to some embodiments of this disclosure;
FIG. 11 is a flowchart of a feeding step according to some embodiments of this disclosure;
FIG. 12 is a specific method diagram of a lifting step when the lifting method provided by some embodiments of this disclosure is applied to transferring battery components;
FIG. 13 is a flowchart of a lifting method according to some embodiments of this disclosure; and
FIG. 14 is a flowchart of a discharging step according to some embodiments of this disclosure.

### Description of reference numerals

100. component to be transferred;
1. frame; 2. lifting mechanism; 211. first drive member; 2121. first belt transmission assembly; 21211. first rotation shaft; 21212. first driving synchronous wheel; 21213. first synchronous belt; 2122. second belt transmission assembly; 21221. second rotation shaft; 21222. second driving synchronous wheel; 21223. second synchronous belt; 2123. rotation transmission assembly; 21231. first right-angle connector; 21232. connecting shaft; 21233. second right-angle connector; 22. carrier assembly; 221. roller; 222. mounting plate; 223. V-shaped roller;
3. pushing mechanism; 31. pushing mounting seat; 32. second drive member; 33. telescopic mounting seat; 34. third drive member; 35. pushing member; 351. main body portion; 352. pushing portion;
4. input mechanism; 5. output mechanism; 61. limiting rod; 611. stopping portion; 62. guide rod;
1000. manufacturing machine; and 2000. battery assembly device.

### DESCRIPTION OF EMBODIMENTS

The embodiments of the technical solutions of this disclosure will be described in detail below with reference to the accompanying drawings. The following embodiments are only used to illustrate the technical solutions of this disclosure more clearly and are merely examples, not intended to limit the scope of protection of this disclosure.

Unless otherwise defined, all technical and scientific terms used herein have the same meaning as commonly understood by those skilled in the technical field of this disclosure; the terms used herein are for the purpose of describing specific embodiments only and are not intended to limit this disclosure; the terms "including" and "having" and any variations thereof in the description and drawings of this disclosure are intended to cover non-exclusive inclusion.

In the description of the embodiments of this disclosure, technical terms such as "first," "second," and "third" are used only to distinguish different objects and should not be understood as indicating or implying relative importance or implying the number, specific order, or hierarchical relationship of the technical features indicated. In the description of the embodiments of this disclosure, "a plurality of" means two or more unless explicitly and specifically limited otherwise.

Reference to "embodiment" herein means that a particular feature, structure, or characteristic described in connection with the embodiment may be included in at least one embodiment of this disclosure. The appearance of this phrase in various places in the specification does not necessarily refer to the same embodiment, nor is it an independent or alternative embodiment mutually exclusive with other embodiments. Those skilled in the art will explicitly and implicitly understand that the embodiments described herein may be combined with other embodiments.

In the description of the embodiments of this disclosure, the term "and/or" merely describes an association relationship between objects, indicating that three relationships may exist, for example, A and/or B may indicate: A alone, both A and B, and B alone. Additionally, the character "/" herein generally indicates an "or" relationship between the associated objects.

In the description of the embodiments of this disclosure, technical terms such as "length," "width," "thickness," "upper," "lower," "front," "rear," "left," "right," "vertical," "horizontal," "top," "bottom," "inner," "outer," and "circumferential" indicate orientations or positional relationships based on the orientations or positional relationships shown in the drawings, solely for the convenience of describing the embodiments of this disclosure and simplifying the description, and do not indicate or imply that the referenced device or element must have a specific orientation, be constructed, operated, or used in a specific orientation, and thus should not be construed as limiting the embodiments of this disclosure.

In the description of the embodiments of this disclosure, unless explicitly specified and limited otherwise, technical terms such as "install," "interconnect," "connect," and "fix" should be broadly understood, for example, as fixed connections, detachable connections, or integral connections; mechanical connections or electrical connections; direct connections or indirect connections through an intermediate medium; or internal communication or interaction between two elements. Those of ordinary skill in the art can understand the specific meanings of the above terms in the embodiments of this disclosure based on specific circumstances.

In the description of the embodiments of this disclosure, unless explicitly specified and limited otherwise, the technical term "contact" should be broadly understood as direct contact, contact through an intermediate medium layer, contact with substantially no interaction force between the contacting parties, or contact with interaction force between the contacting parties.

The following provides a detailed description of this disclosure.

Currently, the application of new energy batteries in daily life and industry is becoming increasingly widespread. New energy batteries are not only used in energy storage power systems such as hydroelectric, thermal, wind, and solar power stations but are also widely applied in electric vehicles such as electric bicycles, electric motorcycles, and electric cars, as well as in aerospace and other fields. With the continuous expansion of the application fields of power batteries, the market demand for new energy batteries is also continuously increasing.

Batteries are composed of multiple bare battery cells. In the battery manufacturing process, a lifter is used to lift or lower trays for transferring bare battery cells, enabling the transfer of trays between conveyor lines at different heights, thereby facilitating the transfer of bare battery cells. The speed at which the lifter lifts or lowers the trays affects the efficiency of battery formation. Therefore, increasing the transfer speed of the lifter is a critical factor in improving battery production efficiency. Additionally, simplifying the structure of the lifter is an effective means to reduce cost investment. Thus, how to increase the transfer speed of the lifter while simplifying the structure of the lifter is one of the topics studied in the industry.

The inventors of this disclosure have noted that in existing lifters, the carrier structure for carrying trays is a plate-like structure. When a tray is pushed onto the plate-like structure, the tray directly contacts the upper surface of the plate-like structure, requiring the tray to overcome significant sliding friction during movement. If the tray is not subjected to forward pushing force from the moment the tray contacts the plate-like structure, the tray cannot move forward to the target position. Therefore, a pushing mechanism is required to push the tray onto the plate-like structure and move the tray to the target position. The inclusion of a pushing mechanism makes the structure of the lifter relatively complex, increasing cost investment. Moreover, the pushing step of the pushing mechanism also consumes a certain amount of time, affecting the time for pushing the tray in and thus the transfer efficiency of the lifter.

Through research, the inventors of this disclosure have found that replacing the existing plate-like structure with multiple rollers to carry the tray allows the tray, which has a certain initial velocity when moving toward the rollers, to cause the rollers to start rotating due to the rolling friction between the tray and the rollers during initial contact. The rotation of the rollers can drive the tray to continue moving forward, allowing the tray to maintain movement for a longer period and move into position without the need for a pushing mechanism. This eliminates the pushing mechanism, simplifying the structure of the lifter, and also saves the time consumed by the full-length pushing step of the pushing mechanism, thereby reducing the time for the tray to enter the lifter and further improving the transfer efficiency of the lifter.

Based on this design concept, the inventors of this disclosure have designed a lifter. The lifter includes at least two lifting mechanisms, at least one of the lifting mechanisms being configured to perform a lifting operation for lifting a component to be transferred, at least one of the lifting mechanisms being configured to perform a lowering operation for lowering a component to be transferred, and the lifting operation and the lowering operation being able to be performed simultaneously. The lifting mechanism includes a power assembly and a carrier assembly, the carrier assembly being connected to the power assembly, and the power assembly being capable of driving the carrier assembly to ascend or descend. The carrier assembly includes a plurality of rollers capable of rotating independently, tops of the plurality of rollers being configured to carry the component to be transferred. Through the rollers rotating in a same direction, the component to be transferred is able to move in a direction perpendicular to a rotation axis of the rollers while contacting the tops of the rollers.

When the lifter is applied to the section of transferring trays in the battery production process, the tray has a certain initial velocity when moving toward the rollers of the carrier assembly. During the process of the tray initially contacting the rollers, the rolling friction between the tray and the rollers causes the rollers to start rotating, and the rotation of the rollers can drive the tray to continue moving forward, allowing the tray to maintain movement for a longer period and move into position without the need for a pushing mechanism. This eliminates the pushing mechanism, simplifying the structure of the lifter, and also saves the time consumed by the full-length pushing step of the pushing mechanism, thereby reducing the time for the tray to enter the lifting mechanism and further improving the transfer efficiency of the lifter.

The lifter provided by the embodiments of this disclosure can be used, but is not limited to, transferring trays for battery production, and can also be used to transfer trays for producing other products or to transfer objects other than trays.

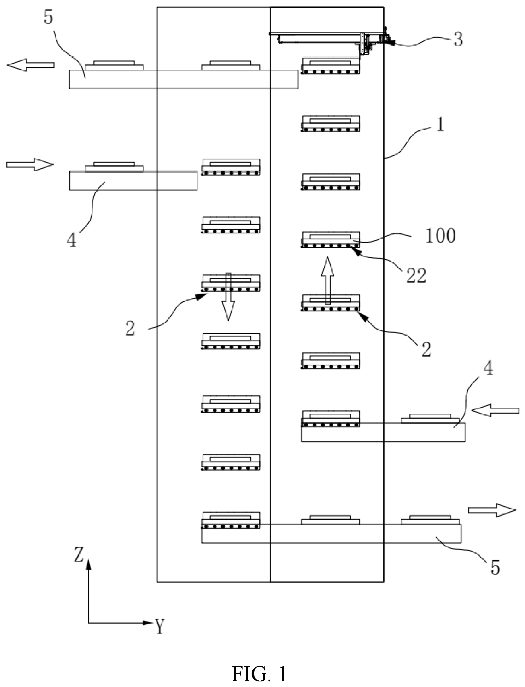

The following provides a detailed description of some embodiments of this disclosure with reference to FIG. 1 to FIG. 14.

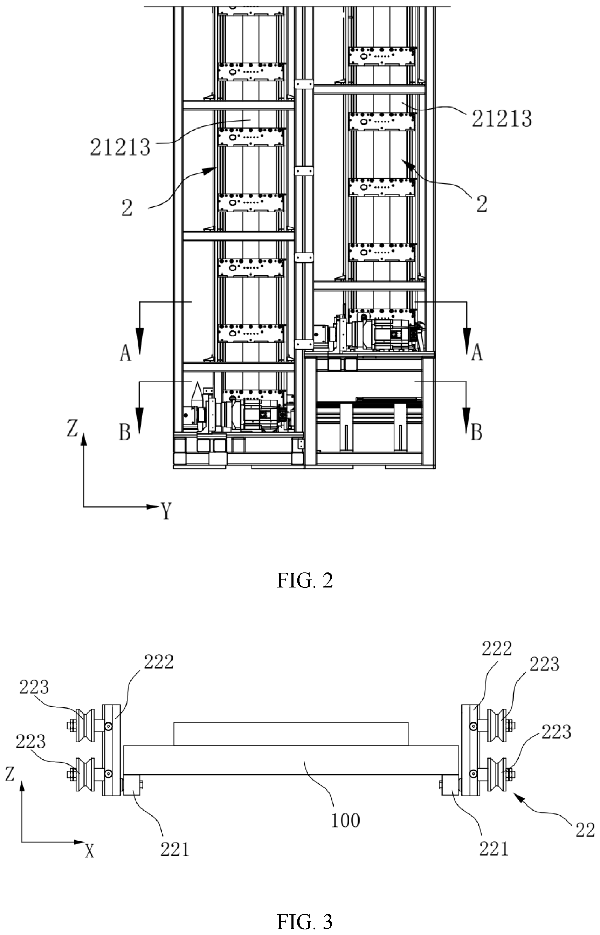

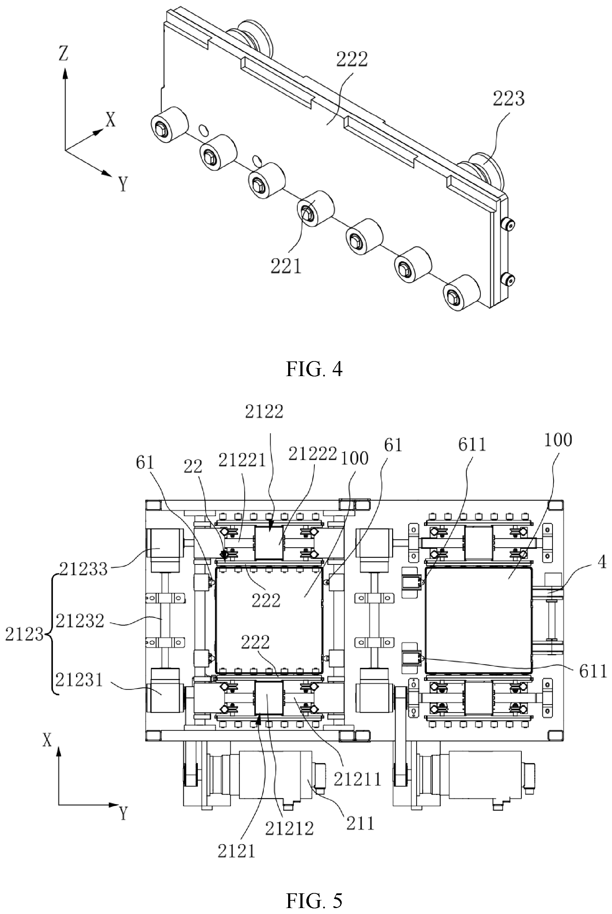

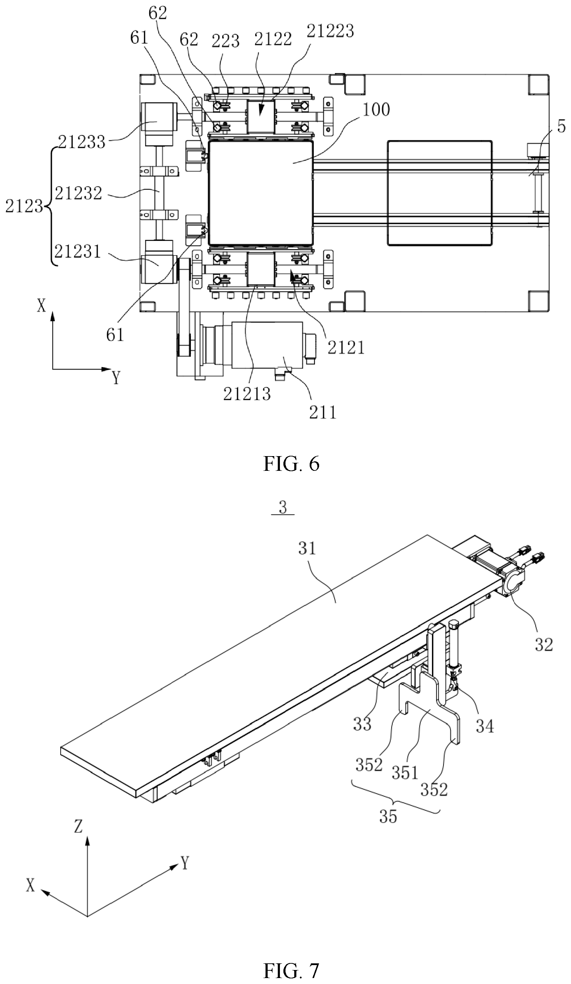

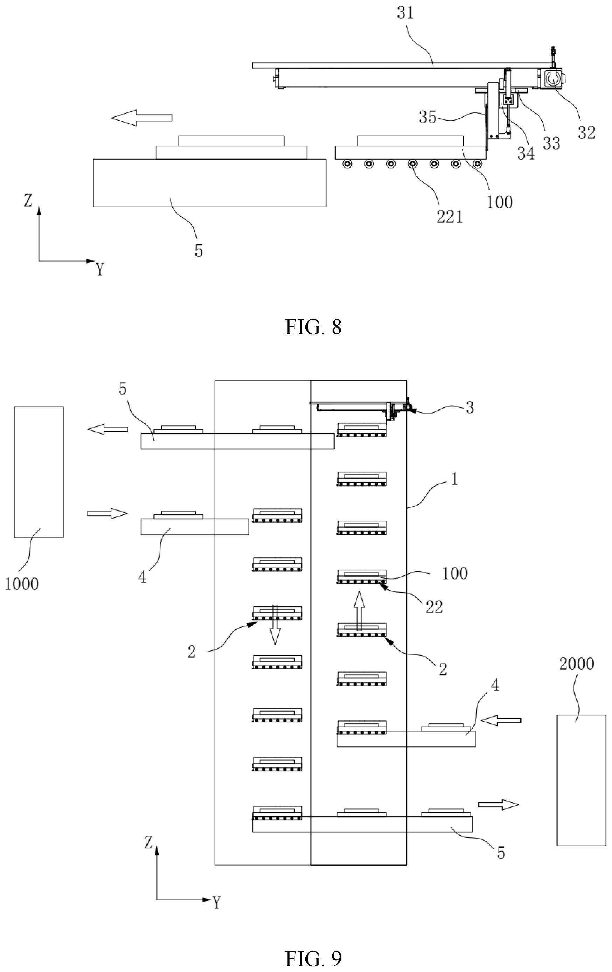

FIG. 1 is a schematic structural diagram of a lifter according to some embodiments of this disclosure; FIG. 2 is a schematic partial structural diagram of a lifter according to some embodiments of this disclosure; FIG. 3 is a schematic partial structural diagram of a carrier assembly according to some embodiments of this disclosure; FIG. 4 is a schematic perspective structural diagram of a partial structure of a carrier assembly according to some embodiments of this disclosure; FIG. 5 is a cross-sectional view at A-A in FIG. 2; FIG. 6 is a cross-sectional view at B-B in FIG. 2; FIG. 7 is a schematic perspective structural diagram of a pushing mechanism according to some embodiments of this disclosure; FIG. 8 is a schematic partial structural diagram at the output mechanism of a lifter according to some embodiments of this disclosure.

In some embodiments of this disclosure, for ease of description, a first direction, a second direction, and a vertical direction are defined, where the first direction, the second direction, and the vertical direction intersect with each other, and the intersection includes perpendicular intersection. For ease of understanding the embodiments of this disclosure, in the embodiments shown in FIG. 1 to FIG. 8, the first direction, the second direction, and the vertical direction are described as perpendicularly intersecting directions, but those skilled in the art should understand that the embodiments of this disclosure are not limited to cases where these three directions perpendicularly intersect. For ease of description, as shown by the arrows in FIG. 1 to FIG. 8, the direction of arrow X is the first direction, the direction of arrow Y is the second direction, and the direction of arrow Z is the vertical direction. Sometimes, the direction pointed by arrow Z along the vertical direction is referred to as "upward," and the opposite direction is referred to as "downward."

As shown in FIG. 1 to FIG. 4, embodiments of this disclosure provide a lifter. The lifter includes at least two lifting mechanisms 2, at least one of the lifting mechanisms 2 being configured to perform a lifting operation for lifting a component to be transferred 100, at least one of the lifting mechanisms 2 being configured to perform a lowering operation for lowering a component to be transferred 100, and the lifting operation and the lowering operation being able to be performed simultaneously. The lifting mechanism 2 includes a power assembly and a carrier assembly 22, the carrier assembly 22 being connected to the power assembly, and the power assembly being capable of driving the carrier assembly 22 to ascend or descend. The carrier assembly 22 includes a plurality of rollers 221 capable of rotating independently, tops of the plurality of rollers 221 being configured to carry the component to be transferred 100. Through the rollers rotating in a same direction, the component to be transferred 100 is able to move in a direction perpendicular to a rotation axis of the rollers 221 while contacting the tops of the rollers.

During the lifting and lowering operations, the power assembly drives the carrier assembly 22 to ascend or descend, and the rollers 221 of the carrier assembly 22 carry the component to be transferred 100, thereby achieving the lifting or lowering function of the lifting mechanism 2 for the component to be transferred 100.

When the lifter provided by the embodiments of this disclosure is applied to the section of transferring trays in the battery production process, empty trays not carrying bare battery cells are lifted or lowered by one lifting mechanism, while loaded trays carrying bare battery cells are lowered or lifted by another lifting mechanism, thereby achieving tray transfer to facilitate the transport of bare battery cells. The lifting and lowering operations are able to be performed simultaneously, enabling simultaneous lifting and lowering of trays, achieving bidirectional transfer with high transfer efficiency.

When a tray moves toward the rollers 221 of the carrier assembly 22, the tray has a certain initial velocity. During the process of the tray initially contacting the rollers 221, the rolling friction between the tray and the rollers causes the rollers 221 to start rotating, and the rotation of the rollers 221 can drive the tray to continue moving forward, allowing the tray to maintain movement for a longer period and move into position without the need for a pushing mechanism. This eliminates the pushing mechanism, simplifying the structure of the lifter, and also saves the time consumed by the full-length pushing step of the pushing mechanism, thereby reducing the time for the tray to enter the lifter and further improving the transfer efficiency of the lifter.

In some embodiments of this disclosure, the carrier assembly 22 further includes a mounting member and a plurality of one-way rotation connectors. The mounting member is connected to an output end of the power assembly, and the power assembly is capable of driving the mounting member to ascend or descend. The one-way rotation connectors are individually mounted on the mounting member, the rollers are connected to the one-way rotation connectors in a one-to-one correspondence, and the roller is capable of rotating in one direction relative to the mounting member through the one-way rotation connectors.

The one-way rotation connectors allow the rollers to rotate in only one direction. During the process of the component to be transferred 100 entering the carrier assembly 22, the component to be transferred 100 drives the rollers 221 to rotate in one direction, and the tangential component of the velocity at the top of the rollers 221 matches the moving speed of the component to be transferred 100, facilitating the continued forward movement of the component to be transferred 100. Since the rollers 221 cannot rotate in the opposite direction, when the component to be transferred 100 moves into position and is stopped, the rollers 221 do not rotate backward, preventing the component to be transferred 100 from rebounding, thereby improving the stability in the lifting or lowering of the component to be transferred 100.

In some embodiments of this disclosure, the mounting member includes two mounting plates 222 arranged oppositely along a first direction. A plurality of the rollers 221, spaced apart along a second direction, are mounted on mutually facing sides of the two mounting plates 222, the first direction, the second direction, and the vertical direction being mutually perpendicular to each other. Mutually facing surfaces of the two mounting plates 222 and the tops of the plurality of rollers 221 define a receiving space for accommodating the component to be transferred 100.

The two opposing mounting plates 222 allow the rollers 221 mounted on the two opposing mounting plates 222 to support opposite ends of the bottom of the component to be transferred 100, thereby stably carrying the component to be transferred 100. Additionally, the two mounting plates 222 are spaced apart in the first direction, allowing the component to be transferred 100 to move into the receiving space along the second direction without obstruction, improving the ease of entry of the component to be transferred 100 into the lifter. Furthermore, the receiving space has mounting plates 222 on its opposite sides, and the mutually facing surfaces of the two mounting plates 222 provide a limiting effect on the component to be transferred 100, enhancing the stability of the carrier assembly 22 in carrying the component to be transferred 100.

In some embodiments of this disclosure, the one-way rotation connectors include one-way bearings.

One-way bearings are bearings that can rotate freely in one direction and lock in the opposite direction.

The selection of one-way bearings is not particularly limited in this disclosure. Any one-way bearing suitable for installation and compatible with connection to the rollers 221 is acceptable. Such bearings can be custom-made or commercially purchased products.

The one-way bearings allow the rollers 221 to rotate in only one direction relative to the mounting plates 222, preventing the component to be transferred 100 from rebounding when the component to be transferred 100 moves into position.

In some embodiments of this disclosure, the rollers 221 include rubber-coated rollers.

The rubber-coated rollers increase the friction between the rollers 221 and the component to be transferred 100, enhancing the interaction effect between the rollers 221 and the component to be transferred 100, thereby improving the efficiency of the component to be transferred 100 entering the receiving space. Additionally, the increased friction further prevents the component to be transferred 100 from rebounding when stopped.

In some embodiments of this disclosure, the rollers 221 include cylindrical rollers.

Cylindrical rollers are rollers whose outer peripheral surface includes a cylindrical surface.

The use of cylindrical rollers increases the contact area between the rollers 221 and the component to be transferred 100, enhancing the interaction effect between the rollers 221 and the component to be transferred 100, thereby improving the efficiency of the component to be transferred 100 entering the receiving space.

In some embodiments of this disclosure, the rollers 221 are connected to a rotation drive member, the rotation drive member is capable of driving the rollers 221 to rotate, and the rotation drive member includes a rotary motor.

The rotation drive member is connected to the plurality of rollers 221 through transmission components such as belts or transmission wheels, achieving simultaneous rotational drive of the plurality of rollers 221.

Thus, after the component to be transferred 100 is transmitted onto the rollers 221, the rotation of the rollers 221 generates a frictional force that drives the component to be transferred 100 forward, thereby accelerating the efficiency of the component to be transferred 100 entering the receiving space, further improving the tray transfer efficiency.

In some embodiments of this disclosure, as shown in FIG. 3 to FIG. 6, the power assembly includes a first drive member 211 and a transmission assembly. The transmission assembly is connected to an output end of the first drive member 211, and the carrier assembly 22 is connected to the transmission assembly. The first drive member 211 is capable of driving the two opposing mounting plates 222 to ascend or descend synchronously through the transmission assembly.

The first drive member 211 is capable of driving the two opposing mounting plates 222 to ascend or descend synchronously through the transmission assembly, ensuring that the component to be transferred 100 carried on the rollers 221 mounted on the mounting plates 222 ascends or descends smoothly.

In some embodiments of this disclosure, the transmission assembly includes a first belt transmission assembly 2121 and a second belt transmission assembly 2122. The two opposing mounting plates 222 are respectively connected to the first belt transmission assembly 2121 and the second belt transmission assembly 2122, and the first drive member 211 is capable of driving the first belt transmission assembly 2121 and the second belt transmission assembly 2122 to move simultaneously to drive the two opposing mounting plates 222 to ascend or descend synchronously.

The two belt transmission assemblies respectively drive the two mounting plates 222 to ascend or descend synchronously, achieving the lifting or lowering of the component to be transferred 100. By using belt transmission, the belts are less likely to stretch, preventing impact on the accuracy of the lifting position, thereby improving the precision of the lifter in controlling the lifting position of the component to be transferred 100.

In some embodiments of this disclosure, the transmission assembly further includes a rotation transmission assembly 2123. Both ends of the rotation transmission assembly 2123 are respectively connected to the first belt transmission assembly 2121 and the second belt transmission assembly 2122, and the rotation transmission assembly 2123 is capable of transmitting the motion of the first belt transmission assembly 2121 to the second belt transmission assembly 2122.

The first drive member 211 is connected to the first belt transmission assembly 2121, capable of driving the first belt transmission assembly 2121 to move, thereby driving the mounting plates 222 connected to the first belt transmission assembly 2121 to ascend or descend. Simultaneously, the first belt transmission assembly 2121 drives the second belt transmission assembly 2122 to move through the rotation transmission assembly 2123, thereby driving the mounting plates 222 connected to the second belt transmission assembly 2122 to ascend or descend, ensuring that the two opposing mounting plates 222 ascend or descend synchronously.

Thus, a single first drive member 211 can simultaneously drive the two transmission assemblies, eliminating the need for an additional drive member, further simplifying the structure of the lifter and reducing cost investment.

In some embodiments of this disclosure, the first belt transmission assembly 2121 includes a first rotation shaft 21211, a first driving synchronous wheel 21212, a first mounting shaft, a first driven synchronous wheel, and a first synchronous belt 21213. The first drive member 211 is drivingly connected to the first rotation shaft 21211. The first driving synchronous wheel 21212 is mounted on the first rotation shaft 21211 and configured to rotate synchronously with the first rotation shaft 21211. The first mounting shaft and the first rotation shaft 21211 are spaced apart in the vertical direction. The first driven synchronous wheel is mounted on the first mounting shaft and configured to rotate about the first mounting shaft. The first synchronous belt 21213 is wound around the first driving synchronous wheel 21212 and the first driven synchronous wheel, and a plurality of the mounting plates 222 spaced equidistantly along a belt extension direction are provided on an outer side of the first synchronous belt 21213.

During the lifting or lowering operation, the first drive member 211 drives the first rotation shaft 21211 to rotate, the first driving synchronous wheel 21212 rotates synchronously with the first rotation shaft 21211, and the first driving synchronous wheel 21212 drives the first synchronous belt 21213 to operate, thereby driving the mounting plates 222 connected to the first synchronous belt 21213 to move. The first mounting shaft and the first rotation shaft 21211 are spaced apart in the vertical direction, so that part of the first synchronous belt 21213 extends along the vertical direction, another part is wound around the first driving synchronous wheel 21212, and another part is wound around the first driven synchronous wheel, thereby driving the mounting plates 222 connected to the first synchronous belt 21213 to sequentially cycle through ascending, passing over the first driven synchronous wheel, descending, and passing over the first driving synchronous wheel 21212.

The second belt transmission assembly 2122 includes a second rotation shaft 21221, a second driving synchronous wheel 21222, a second mounting shaft, a second driven synchronous wheel, and a second synchronous belt 21223. Both ends of the rotation transmission assembly 2123 are respectively connected to the first rotation shaft 21211 and the second rotation shaft 21221. The second driving synchronous wheel 21222 is mounted on the second rotation shaft 21221 and configured to rotate synchronously with the second rotation shaft. The second mounting shaft and the second rotation shaft 21221 are spaced apart in the vertical direction. The second driven synchronous wheel is mounted on the second mounting shaft and configured to rotate about the second mounting shaft. The second synchronous belt 21223 is wound around the second driving synchronous wheel 21222 and the second driven synchronous wheel, and a plurality of the mounting plates 222 spaced equidistantly along a belt extension direction are provided on an outer side of the second synchronous belt 21223.

During the lifting or lowering operation, the rotation transmission assembly 2123 transmits the rotation of the first rotation shaft 21211 to the second rotation shaft 21221, the rotation of the second rotation shaft 21221 drives the second driving synchronous wheel 21222 to rotate, thereby driving the second synchronous belt 21223 to operate, thereby driving the mounting plates 222 connected to the second synchronous belt 21223 to move. The second mounting shaft and the second rotation shaft 21221 are spaced apart in the vertical direction, so that part of the second synchronous belt 21223 extends along the vertical direction, another part is wound around the second driving synchronous wheel 21222, and another part is wound around the second driven synchronous wheel, thereby driving the mounting plates 222 connected to the second synchronous belt 21223 to sequentially cycle through ascending, passing over the second driven synchronous wheel, descending, and passing over the second driving synchronous wheel 21222.

It should be noted that in the lifting mechanism 2 for performing the lifting operation, the ascending part of the first synchronous belt 21213 during transmission is arranged opposite to the ascending part of the second synchronous belt 21223 during transmission, so that multiple mounting plates 222 connected to the ascending part of the first synchronous belt 21213 and multiple mounting plates 222 connected to the ascending part of the second synchronous belt 21223 are aligned one-to-one in the first direction, forming multiple receiving spaces spaced apart in the vertical direction. The components to be transferred 100 accommodated in the receiving spaces ascend sequentially under the transmission action of the first synchronous belt 21213 and the second synchronous belt 21223. In the lifting mechanism 2 for performing the lowering operation, the descending part of the first synchronous belt 21213 during transmission is arranged opposite to the descending part of the second synchronous belt 21223 during transmission, so that multiple mounting plates 222 connected to the descending part of the first synchronous belt 21213 and multiple mounting plates 222 connected to the descending part of the second synchronous belt 21223 are aligned one-to-one in the first direction, forming multiple receiving spaces spaced apart in the vertical direction. The components to be transferred 100 accommodated in the receiving spaces descend sequentially under the transmission action of the first synchronous belt 21213 and the second synchronous belt 21223.

Thus, the mounting plates 222 connected to the first synchronous belt 21213 and the mounting plates 222 connected to the second synchronous belt 21223 ascend or descend synchronously, enabling the carrier assembly 22 to ascend or descend smoothly. Additionally, since both the first synchronous belt 21213 and the second synchronous belt 21223 are connected with multiple equidistantly spaced mounting plates 222, multiple equidistantly spaced receiving spaces are formed between the first synchronous belt 21213 and the second synchronous belt 21223. Consequently, during the transmission of the first synchronous belt 21213 and the second synchronous belt 21223, the components to be transferred 100 accommodated in the multiple receiving spaces ascend or descend sequentially at a uniform pace, thereby improving the transfer efficiency of the component to be transferred 100.

In some embodiments of this disclosure, as shown in FIG. 5 and FIG. 6, the rotation transmission assembly 2123 includes a first right-angle connector 21231, a connecting shaft 21232, and a second right-angle connector 21233. A power input end of the first right-angle connector 21231 is connected to the first rotation shaft 21211; one end of the connecting shaft 21232 is connected to a power output end of the first right-angle connector 21231; a power input end of the second right-angle connector 21233 is connected to another end of the connecting shaft 21232, and a power output end of the second right-angle connector 21233 is connected to the second rotation shaft 21221.

A right-angle connector is a device used to connect two mutually perpendicular to each other rotation shafts and transmit the rotational motion of one rotation shaft to the other. The connector has a power input end and a power output end. The power input end is used for connecting to the driving shaft and the power output end is used for connecting to the driven shaft.

The arrangement of the first right-angle connector 21231, the connecting shaft 21232, and the second right-angle connector 21233 enables the transmission of the rotation of the first rotation shaft 21211 to the second rotation shaft 21221, with a simple structure for the rotation transmission assembly 2123 and low cost investment.

In some embodiments of this disclosure, the first drive member 211 includes a servo motor.

The servo motor facilitates control of the driving stroke and speed, thereby effectively controlling the stroke and speed of the lifting or lowering of the component to be transferred 100.

In some embodiments of this disclosure, the first right-angle connector 21231 and the first rotation shaft 21211 are connected by a male-female fit; and the second right-angle connector 21233 and the second rotation shaft 21221 are connected by a clamping mechanism.

The male-female fit means that the outer peripheral surface of the first rotation shaft 21211 is provided with a groove or protrusion, the inner wall of the first right-angle connector 21231 is provided with a protrusion or groove, and the groove of one and the protrusion of the other cooperate between the first rotation shaft 21211 and the first right-angle connector 21231 to restrict the relative rotation of the first right-angle connector 21231 and the first rotation shaft 21211, ensuring a secure connection between the first rotation shaft 21211 and the first right-angle connector 21231.

The clamping mechanism means that the second rotation shaft 21221 is provided with a clamping structure. The clamping structure clamps the second rotation shaft 21221. The clamping mechanism allows for rotating the second rotation shaft 21221 during installation to adjust the angle of the second rotation shaft 21221, and then tightening the second rotation shaft 21221 when appropriately adjusted. For example, the clamping structure includes a brake.

The male-female fit ensures a secure connection between the first rotation shaft 21211 and the first right-angle connector 21231, while the clamping mechanism allows for adjusting the angle of the second rotation shaft 21221 before tightening during the connection of the second right-angle connector 21233 and the second rotation shaft 21221. This enables adjustment of the installation angle of the second driving synchronous wheel 21222 by adjusting the angle of the second rotation shaft 21221, ensuring that the installation angles of the second driving synchronous wheel 21222 and the first driving synchronous wheel 21212 are the same, so that the first synchronous belt 21213 and the second synchronous belt 21223 are completely aligned in the first direction. Consequently, the mounting plates 222 connected to the first synchronous belt 21213 and the second synchronous belt 21223 are completely aligned in the first direction, ensuring that the receiving space is in a horizontal plane, thereby improving the stability of carrying the component to be transferred 100.

In some embodiments of this disclosure, the component to be transferred 100 includes an empty tray not carrying an object or a loaded tray carrying an object, the object including a battery component. The lifting mechanism 2 for performing the lifting operation is used to lift the loaded tray, and the lifting mechanism 2 for performing the lowering operation is used to lower the empty tray.

For example, as shown in FIG. 1, the arrows in FIG. 1 indicate the direction of tray movement, with one lifting mechanism 2 on the right side used to lift loaded trays, and one lifting mechanism 2 on the left side used to lower empty trays.

An input portion of the lifting mechanism 2 for lowering receives empty trays. An empty tray is lowered to the output portion and sent out of the lifting mechanism 2. After being output, the empty tray enters the device for manufacturing battery components and receives the manufactured battery components, becoming a loaded tray carrying battery components. The loaded tray is conveyed to the lifting mechanism 2 for lifting, the input portion of the lifting mechanism 2 receives the loaded tray, lifts the loaded tray to the output portion, and sends the loaded tray out of the lifting mechanism 2. After being output, the loaded tray enters the device for assembling battery cells, where the battery components in the loaded tray are taken out, leaving an empty tray, which is conveyed to the lifting mechanism 2 for lowering. The tray is thus cycled to achieve the transport of battery components.

In some embodiments of this disclosure, the lifting mechanism 2 for performing the lifting operation is used to lift the empty tray, and the lifting mechanism 2 for performing the lowering operation is used to lower the loaded tray.

The input portion of the lifting mechanism 2 for lifting receives the empty tray, lifts the empty tray to the output portion, and sends the empty tray out of the lifting mechanism 2. After being output, the empty tray enters the device for manufacturing battery components and receives the manufactured battery components, becoming a loaded tray carrying battery components. The loaded tray is conveyed to the lifting mechanism 2 for lowering, the input portion of the lifting mechanism 2 receives the loaded tray, lowers the loaded tray to the output portion, and sends the loaded tray out of the lifting mechanism 2. After being output, the loaded tray enters the device for assembling battery cells. After the battery components in the loaded tray are taken out, the remaining empty tray is conveyed to the lifting mechanism 2 for lowering. The tray is thus cycled to achieve the transport of battery components.

The lifter provided by this embodiment is applied to the transport operation of battery components, including bare battery cells and other components used to form battery cells. The structure of the lifter is simplified, reducing the cost of transferring battery components, and improving the transfer efficiency of battery components, thereby improving the manufacturing cost and improving the manufacturing efficiency of battery cells.

Although not shown, bare battery cells generally include electrode assemblies. The electrode assembly includes a positive electrode, a negative electrode, and a separator. During the charging and discharging process of the bare battery cell, active ions move back and forth between the positive and negative electrodes. The separator is arranged between the positive and negative electrodes to prevent short circuits while allowing active ions to pass through.

In some embodiments of this disclosure, the electrode assembly is provided with tabs, and the tabs can conduct current from the electrode assembly. The tabs include a positive tab and a negative tab.

In some embodiments of this disclosure, as shown in FIG. 1, each of the lifting mechanisms 2 has input portions and output portions spaced apart in the vertical direction, where a pushing mechanism 3 is provided corresponding to each of the output portions, and the pushing mechanism 3 is capable of extending along the second direction into the receiving space that has moved to the output portion to push the component to be transferred 100 out of the receiving space.

The input portion is the upper or lower limit position of the lifting stroke of the component to be transferred 100 carried by the carrier assembly 22, and the output portion is the lower or upper limit position of the lifting stroke of the component to be transferred 100 carried by the carrier assembly 22. After the component to be transferred 100 is fed into the input portion, the component to be transferred 100 begins to be lifted or lowered. After the component to be transferred 100 moves to the output portion, the component to be transferred 100 is sent out of the lifting mechanism 2.

The pushing mechanism 3 is configured to push the component to be transferred 100, which has been lifted or lowered to the output portion, out of the receiving space, thereby sending the lifted or lowered component to be transferred 100 out of the lifting mechanism 2, facilitating the entry into the next process of the component to be transferred 100.

In some embodiments of this disclosure, as shown in FIG. 7 and FIG. 8, the pushing mechanism 3 includes a pushing mounting seat 31, a second drive member 32, a telescopic mounting seat 33, a third drive member 34, and a pushing member 35. The second drive member 32 is mounted on the pushing mounting seat 31; the telescopic mounting seat 33 is connected to an output end of the second drive member 32, the second drive member 32 is capable of driving the telescopic mounting seat 33 to move reciprocally along the second direction; the third drive member 34 is mounted on the telescopic mounting seat 33; the pushing member 35 is connected to an output end of the third drive member 34, the third drive member 34 is capable of driving the pushing member 35 to move reciprocally along the vertical direction, the third drive member 34 drives the pushing member 35 to descend to a side area adjacent to the receiving space at the output portion, and the second drive member 32 drives the pushing member 35 to move along the second direction into the receiving space at the output portion to push the component to be transferred 100 out of the receiving space.

During the process of pushing the component to be transferred 100, the third drive member 34 drives the pushing member 35 to descend to the side area adjacent to the receiving space at the output portion, and the second drive member 32 drives the pushing member 35 to move along the second direction into the receiving space at the output portion, pushing the component to be transferred 100 out of the receiving space, thereby sending the component to be transferred 100 out of the lifting mechanism 2, facilitating the entry into the next process of the component to be transferred 100.

In some embodiments of this disclosure, the second drive member 32 includes a linear motor or a cylinder; the third drive member 34 includes a linear motor or a cylinder.

In some embodiments of this disclosure, the pushing member 35 includes a main body portion 351 and two pushing portions 352. The main body portion 351 is connected to the output end of the third drive member 34. The two pushing portions 352 are respectively connected to both ends of the bottom of the main body portion 351. The pushing portion 352 includes a pushing surface for abutting against and pushing the component to be transferred 100.

Thus, the two pushing portions 352 simultaneously abut against and push the component to be transferred 100, improving the stability of pushing and preventing tilting of the component to be transferred 100.

In some embodiments of this disclosure, as shown in FIG. 1 and FIG. 5, an input mechanism 4 is provided corresponding to each of the input portions. The input mechanism 4 is capable of inputting the component to be transferred 100 along the second direction into the receiving space that has moved to the input portion.

The input mechanism 4 is configured to feed the component to be transferred 100 from outside the lifter into the receiving space of the lifter, improving the transfer function of the lifter for the component to be transferred 100.

In some embodiments of this disclosure, the input mechanism 4 has a conveying path extending along the second direction. The conveying path of the input mechanism 4 is arranged close to the input portion corresponding to the input mechanism 4.

The input mechanism 4 is a conveying mechanism. The conveying mechanism is a mechanical device that conveys materials along a certain path in a continuous, uniform, and stable manner. Common conveying mechanisms include belt conveyors, chain conveyors, roller conveyors, double-speed chain conveyors, and roller conveyors. The input mechanism 4 in this disclosure can be any of a belt conveyor, chain conveyor, roller conveyor, double-speed chain conveyor, or roller conveyor.

The input mechanism 4 conveys the component to be transferred 100 close to the input portion of the lifting mechanism 2. When partially contacting the rollers 221, the component to be transferred 100 drives the rollers 221 to rotate, and the tangential component of the velocity at the top of the rollers 221 matches the moving speed of the component to be transferred 100. Therefore, after the component to be transferred 100 completely detaches from the input mechanism 4, the interaction between the rollers 221 and the component to be transferred 100 facilitates the continued forward movement of the component to be transferred 100, allowing the component to be transferred 100 to move forward into position.

The input mechanism 4 provides an initial velocity to the component to be transferred 100, and the component to be transferred 100 can move into position through interaction with the rollers 221. This eliminates the need for a pushing mechanism to push the component to be transferred 100 forward throughout the process, simplifying the structure of the lifter, saving costs, and allowing the component to be transferred 100 to enter more efficiently by eliminating the full-length pushing step of the pushing mechanism, thereby enhancing transfer efficiency.

In some embodiments of this disclosure, as shown in FIG. 1 and FIG. 6, an output mechanism 5 is provided corresponding to each of the output portions. The output mechanism 5 has a conveying path extending along the second direction. The conveying path of the output mechanism 5 is arranged close to the output portion corresponding to the output mechanism 5. The pushing mechanism 3 corresponding to the output portion is capable of pushing the component to be transferred 100 at the output portion to the conveying path of the output mechanism 5 corresponding to the output portion.

The output mechanism 5 is a conveying mechanism. The conveying mechanism is a mechanical device that conveys materials along a certain path in a continuous, uniform, and stable manner. Common conveying mechanisms include belt conveyors, chain conveyors, roller conveyors, double-speed chain conveyors, and roller conveyors. The output mechanism 5 in this disclosure can be any of a belt conveyor, chain conveyor, roller conveyor, double-speed chain conveyor, or roller conveyor.

The output mechanism 5, cooperating with the pushing mechanism 3, is capable of outputting the component to be transferred 100 from the lifter after the component to be transferred 100 lifted or lowered into position, further improving the transfer function of the lifter for the component to be transferred 100.

In some embodiments of this disclosure, as shown in FIG. 5 and FIG. 6, at least one side of the receiving space of the carrier assembly 22 along the second direction is provided with a limiting rod 61 extending along the vertical direction. The limiting rod 61 is used to limit the position of the component to be transferred 100 accommodated in the receiving space in the second direction.

The limiting rod 61 improves the stability of the component to be transferred 100 during the lifting or lowering process.

In some embodiments of this disclosure, two limiting rods 61 are provided on the same side of the receiving space of the carrier assembly 22.

Thus, the stability of the component to be transferred 100 during the lifting or lowering process is further improved.

In some embodiments of this disclosure, as shown in FIG. 5, the side of the input portion where the input mechanism 4 is provided is not provided with a limiting rod 61, and the limiting rod 61 on the side opposite to the input mechanism 4 extends to a side area adjacent to the input portion to form a stopping portion 611. When the component to be transferred 100 moves along the second direction to abut against the stopping portion 611, the component to be transferred 100 moves into position.

Since the component to be transferred 100 has a certain speed after entering the rollers 221, the stopping position of the component to be transferred 100 is not easily controlled. Therefore, the stopping portion 611 is used to stop the component to be transferred 100, improving the accuracy of the stopping position of the component to be transferred 100.

In some embodiments of this disclosure, the two limiting rods 61 provided on the same side of the receiving space both extend to form stopping portions 611, so that two stopping portions 611 are provided on a side area adjacent to the input portion. The two stopping portions 611 improve the stability of stopping the component to be transferred 100, preventing tilting.

In some embodiments of this disclosure, as shown in FIG. 6, no limiting rod 61 is provided on the side of the output portion where the output mechanism 5 is located, and the limiting rod 61 on the side opposite to the output mechanism 5 extends to a side area adjacent to the input portion. The part of the limiting rod 61 extending to the side area adjacent to the input portion is used to limit the position of the component to be transferred 100 on that side.

Thus, the component to be transferred 100, which has been lifted or lowered to the output portion, is not obstructed when moving out and can smoothly move to the output mechanism 5, while the side of the component to be transferred 100 facing away from the output mechanism 5 is limited by the limiting rod 61.

In some embodiments of this disclosure, receiving spaces of the carrier assembly 22, except for those at the input portion and the output portion, are provided with limiting rods 61 on both sides along the second direction.

Thus, during the movement of the component to be transferred 100 from the input portion to the output portion, the component to be transferred 100 is positionally limited on all sides, further improving the stability in the lifting or lowering of the component to be transferred 100.

In some embodiments of this disclosure, the surface of the limiting rod 61 abutting against the component to be transferred 100 is configured as a convex arc surface.

During the lifting or lowering process of the component to be transferred 100, the component to be transferred 100 moves relative to the limiting rod 61, and the convex arc surface prevents the limiting rod 61 from causing damage to the component to be transferred 100.

In some embodiments of this disclosure, the lifter further includes a frame 1, with the lifting mechanism 2, the pushing mechanism 3, the input mechanism 4, and the output mechanism 5 respectively mounted on the frame 1.

Thus, the lifting mechanism 2, the pushing mechanism 3, the input mechanism 4, and the output mechanism 5 are connected as an integrated device.

In the lifting mechanism 2, the first drive member 211 is mounted on the frame 1, the first rotation shaft 21211 and the second rotation shaft 21221 are respectively rotatably connected to the frame 1 through bearings, the first mounting shaft and the second mounting shaft are fixedly connected to the frame 1, the first right-angle connector 21231 and the second right-angle connector 21233 are mounted on the frame 1, and the connecting shaft 21232 is rotatably connected to the frame 1 through bearings.

In the pushing mechanism 3, the pushing mounting seat 31 is mounted on the frame 1.

The input mechanism 4 and the output mechanism 5 are respectively mounted on the frame 1.

The limiting rod 61 is fixedly connected to the frame 1.

In some embodiments of this disclosure, each mounting plate 222 is provided with four V-shaped rollers 223 on a side facing away from the rollers 221. The four V-shaped rollers 223 are arranged in two rows and two columns. Two V-shaped rollers 223 in the same column rollingly engage with the same guide rod 62, and the guide rod 62 extends along the vertical direction.

The V-shaped roller 223 is a roller with an outer peripheral surface including a V-shaped concave surface. Correspondingly, the guide rod 62 is a rod with an outer surface including a V-shaped convex surface.

The cooperation of the V-shaped rollers 223 and the guide rod 62 further improves the moving stability of the carrier assembly 22, thereby improving the transfer stability for the component to be transferred 100.

The guide rod 62 is fixedly connected to the frame 1, improving the guidance stability of the guide rod 62 for the V-shaped rollers 223.

It should be noted that two guide rods 62 spaced apart in the first direction are provided for each V-shaped roller 223. One of the two guide rods 62 rollingly engages with the V-shaped roller 223 during the ascending process, while the other rollingly engages with the V-shaped roller 223 during the descending process. This improves the stability in both the ascending and descending processes of the mounting plate 222.

FIG. 9 is a schematic structural diagram of a battery production line according to some embodiments of this disclosure.

Embodiments of this disclosure further provide a battery production line, including a manufacturing machine 1000, a battery assembly device 2000, and the above-described lifter. The manufacturing machine 1000 is used to manufacture battery components; and the battery assembly device 2000 is used to assemble batteries using the battery components. At least one lifting mechanism 2 of the lifter performs a lifting operation or a lowering operation on a loaded tray carrying the battery components to transfer the loaded tray to the battery assembly device 2000, and at least one lifting mechanism 2 of the lifter performs a lowering operation or a lifting operation on an empty tray removed from the battery assembly device 2000 to transfer the empty tray to the manufacturing machine 1000.

The battery components include bare battery cells, and the manufacturing machine 1000 includes a winding machine for winding bare battery cells.

The battery production line provided by the embodiments of this disclosure includes the above-described lifter. Due to the simplified structure and improved transfer efficiency of the lifter, the structure of the battery production line provided by the embodiments of this disclosure is simplified, and the battery production efficiency is improved.

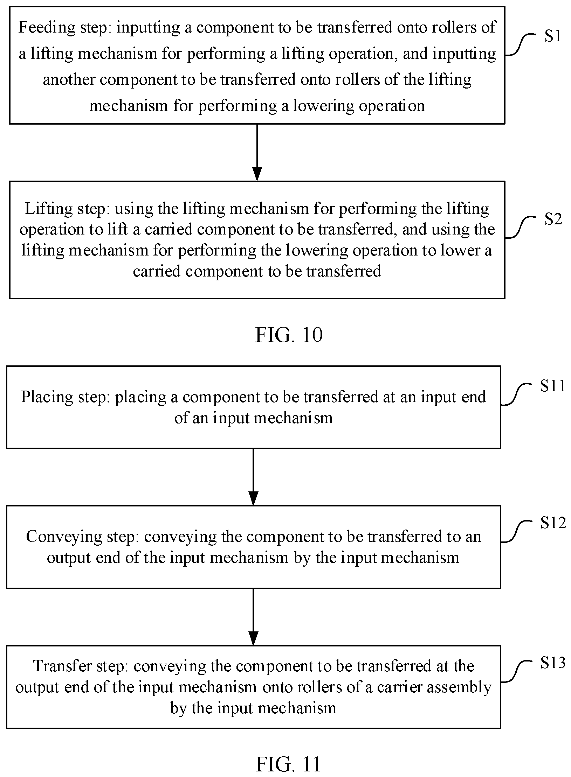

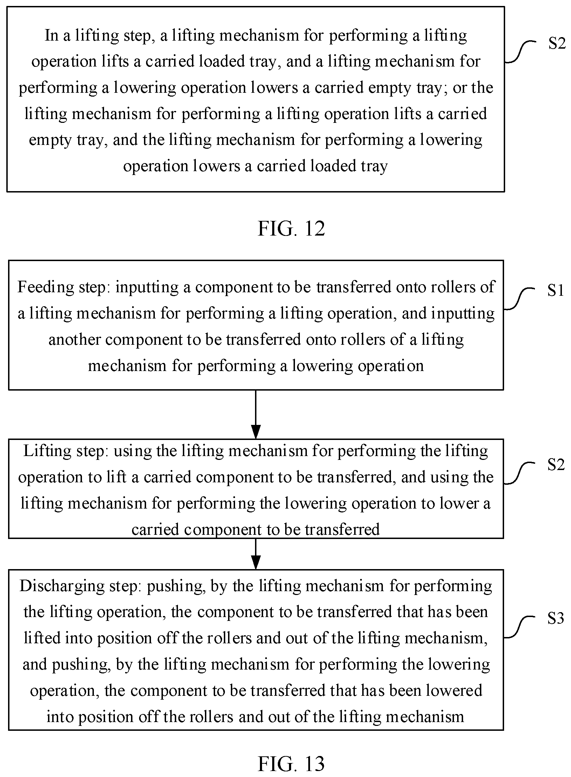

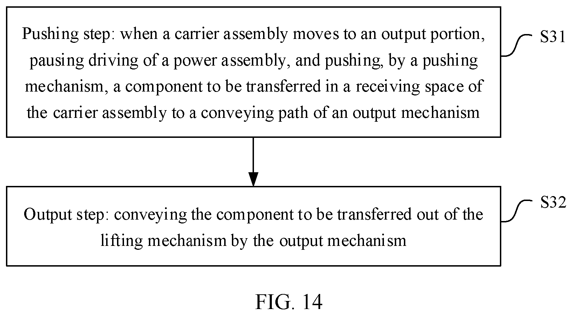

FIG. 10 is a partial flowchart of a lifting method according to some embodiments of this disclosure; FIG. 11 is a flowchart of a feeding step according to some embodiments of this disclosure; FIG. 12 is a specific method diagram of a lifting step when the lifting method provided by some embodiments of this disclosure is applied to transferring battery components; FIG. 13 is a flowchart of a lifting method according to some embodiments of this disclosure; and FIG. 14 is a flowchart of a discharging step according to some embodiments of this disclosure.

Embodiments of this disclosure further provide a lifting method. a lifter is used to lift a plurality of components to be transferred 100 and lower another plurality of components to be transferred 100. The lifter includes at least two lifting mechanisms 2, at least one of the lifting mechanisms 2 being configured to perform a lifting operation for lifting a component to be transferred 100, at least one of the lifting mechanisms 2 being configured to perform a lowering operation for lowering a component to be transferred 100, and the lifting operation and the lowering operation being able to be performed simultaneously. The lifting mechanism 2 includes a power assembly and a carrier assembly 22, the carrier assembly 22 being connected to the power assembly, and the power assembly being capable of driving the carrier assembly 22 to ascend or descend. The carrier assembly 22 includes a plurality of rollers 221, tops of the plurality of rollers 221 being configured to carry the component to be transferred 100. Through the rollers rotating in a same direction, the component to be transferred 100 is able to move in a direction perpendicular to a rotation axis of the rollers 221 while contacting the tops of the rollers.

As shown in FIG. 10, the lifting method includes:
S1, a feeding step: inputting a component to be transferred onto the rollers of the lifting mechanism for performing the lifting operation, and inputting another component to be transferred onto the rollers of the lifting mechanism for performing the lowering operation; and
S2, a lifting step: using the lifting mechanism for performing the lifting operation to lift the carried component to be transferred, and using the lifting mechanism for performing the lowering operation to lower the carried component to be transferred.

When the lifting method provided by the embodiments of this disclosure is applied to transferring trays in the battery production process, empty trays not carrying bare battery cells are lifted or lowered by one lifting mechanism, while loaded trays carrying bare battery cells are lowered or lifted by another lifting mechanism, thereby achieving tray transfer to facilitate the transport of bare battery cells. The lifting and lowering operations are able to be performed simultaneously, enabling simultaneous lifting and lowering of trays, achieving bidirectional transfer with high transfer efficiency.

When a tray moves toward the rollers 221 of the carrier assembly 22, the tray has a certain initial velocity. During the process of the tray initially contacting the rollers 221, the rolling friction between the tray and the rollers causes the rollers 221 to start rotating, and the rotation of the rollers 221 can drive the tray to continue moving forward, allowing the tray to maintain movement for a longer period and move into position without the need for a pushing mechanism. This eliminates the pushing mechanism, simplifying the structure of the lifter, and also saves the time consumed by the full-length pushing step of the pushing mechanism, thereby reducing the time for the tray to enter the lifter and further improving the transfer efficiency of the lifter.

In some embodiments of this disclosure, each of the lifting mechanisms 2 has input portions and output portions spaced apart in the vertical direction, an input mechanism 4 is provided corresponding to each of the input portions, and the feeding step includes:
S11, a placing step: placing the component to be transferred at an input end of the input mechanism;
S12, a conveying step: conveying the component to be transferred to an output end of the input mechanism by the input mechanism; and
S13, a transfer step: conveying the component to be transferred at the output end of the input mechanism onto the rollers of the carrier assembly by the input mechanism.

Thus, the input mechanism 4 feeds the component to be transferred 100 from outside the lifter into the receiving space of the lifter, improving the transfer function of the lifter for the component to be transferred 100.

In some embodiments of this disclosure, the component to be transferred 100 includes an empty tray not carrying an object or a loaded tray carrying an object, the object including a battery component; and
in the lifting step S2, the lifting mechanism for performing the lifting operation lifts the carried loaded tray, and the lifting mechanism for performing the lowering operation lowers the carried empty tray; or
the lifting mechanism for performing the lifting operation lifts the carried empty tray, and the lifting mechanism for performing the lowering operation lowers the carried loaded tray.

The lifting method provided by this embodiment is applied to the transport of battery components. The battery components include bare battery cells and other components used to form battery cells. The structure of the lifter is simplified, reducing the cost of transferring battery components, and the lifting method improves the transfer efficiency of battery components, thereby improving the manufacturing cost and improving the manufacturing efficiency of battery cells.

In some embodiments of this disclosure, after the lifting step, the method further includes:
S3, a discharging step: pushing, by the lifting mechanism for performing the lifting operation, the component to be transferred that has been lifted into position off the rollers and out of the lifting mechanism, and pushing, by the lifting mechanism for performing the lowering operation, the component to be transferred that has been lowered into position off the rollers and out of the lifting mechanism.

After moving into position, the component to be transferred 100 is moved out of the lifting mechanism 2, further improving the transfer function of the lifter for the component to be transferred 100.

In some embodiments of this disclosure, each of the lifting mechanisms 2 has input portions and output portions spaced apart in the vertical direction, a pushing mechanism 3 and an output mechanism 5 are provided corresponding to each of the output portions, and the discharging step includes:
S31, a pushing step: when the carrier assembly moves to the output portion, pausing driving of the power assembly, and pushing, by the pushing mechanism, the component to be transferred in the receiving space of the carrier assembly to a conveying path of the output mechanism; and
S32, an output step: conveying the component to be transferred out of the lifting mechanism by the output mechanism.

The output mechanism 5, cooperating with the pushing mechanism 3, is capable of outputting the component to be transferred 100 from the lifter after the component to be transferred 100 is lifted or lowered into position, further improving the transfer function of the lifter for the component to be transferred 100.

The above embodiments are only used to illustrate the technical solutions of this disclosure and are not intended to limit it; although the disclosure has been described in detail with reference to the foregoing embodiments, those of ordinary skill in the art should understand that they can still modify the technical solutions described in the foregoing embodiments or make equivalent replacements for some or all of the technical features; these modifications or replacements do not cause the essence of the corresponding technical solutions to depart from the scope of the technical solutions of the embodiments of this disclosure and should be included within the scope of the description of this disclosure. In particular, as long as there is no structural conflict, the various technical features mentioned in the embodiments can be combined in any manner.

### Industrial applicability

This disclosure provides a lifter, a battery production line, and a lifting method. The lifter includes at least two lifting mechanisms, at least one of the lifting mechanisms is configured to perform a lifting operation for lifting a component to be transferred, at least one of the lifting mechanisms is configured to perform a lowering operation for lowering a component to be transferred, and the lifting operation and the lowering operation are able to be performed simultaneously. The lifting mechanism includes a power assembly and a carrier assembly, the carrier assembly being connected to the power assembly, and the power assembly being capable of driving the carrier assembly to ascend or descend. The carrier assembly includes a plurality of rollers capable of rotating independently, tops of the plurality of rollers being configured to carry the component to be transferred. Through the rollers rotating in a same direction, the component to be transferred is able to move in a direction perpendicular to a rotation axis of the rollers while contacting the tops of the rollers. This disclosure simplifies the structure of the lifter and improves the transfer efficiency of the lifter.

## Claims

1. A lifter, comprising:
at least two lifting mechanisms, at least one of the lifting mechanisms being configured to perform a lifting operation for lifting a component to be transferred, at least one of the lifting mechanisms being configured to perform a lowering operation for lowering a component to be transferred, and the lifting operation and the lowering operation being able to be performed simultaneously; wherein
the lifting mechanism comprises a power assembly and a carrier assembly, the carrier assembly being connected to the power assembly, and the power assembly being capable of driving the carrier assembly to ascend or descend, wherein the carrier assembly comprises a plurality of rollers capable of rotating independently, tops of the plurality of rollers being configured to carry the component to be transferred;
through the rollers rotating in a same direction, the component to be transferred is able to move in a direction perpendicular to a rotation axis of the rollers while contacting the tops of the rollers; and
the carrier assembly further comprises:
a mounting member, the mounting member being connected to an output end of the power assembly, and the power assembly being capable of driving the mounting member to ascend or descend; and
a plurality of one-way rotation connectors, wherein the one-way rotation connectors are individually mounted on the mounting member, the rollers are connected to the one-way rotation connectors in a one-to-one correspondence, and the roller is capable of rotating in one direction relative to the mounting member through the one-way rotation connector.

2. The lifter according to claim 1, wherein
the mounting member comprises two mounting plates arranged oppositely along a first direction, wherein a plurality of the rollers, spaced apart along a second direction, are mounted on mutually facing sides of the two mounting plates, the first direction, the second direction, and a vertical direction being mutually perpendicular to each other, and
mutually facing surfaces of the two mounting plates and the tops of the plurality of rollers define a receiving space for accommodating the component to be transferred.

3. The lifter according to claim 1 or 2, wherein
the one-way rotation connector comprises a one-way bearing.

4. The lifter according to any one of claims 1 to 3, wherein
the roller comprises a rubber-coated roller.

5. The lifter according to claim 2, wherein
the power assembly comprises:
a first drive member; and
a transmission assembly connected to an output end of the first drive member, the mounting plates being connected to the transmission assembly;
wherein the first drive member is capable of driving the two opposing mounting plates to ascend or descend synchronously through the transmission assembly.

6. The lifter according to claim 5, wherein
the transmission assembly comprises a first belt transmission assembly and a second belt transmission assembly, the two opposing mounting plates being respectively connected to the first belt transmission assembly and the second belt transmission assembly, and
the first drive member is capable of driving the first belt transmission assembly and the second belt transmission assembly to move simultaneously to drive the two opposing mounting plates to ascend or descend synchronously.

7. The lifter according to claim 6, wherein
the transmission assembly further comprises a rotation transmission assembly, wherein both ends of the rotation transmission assembly are respectively connected to the first belt transmission assembly and the second belt transmission assembly, and the rotation transmission assembly is capable of transmitting the motion of the first belt transmission assembly to the second belt transmission assembly.

8. The lifter according to claim 7, wherein
the first belt transmission assembly comprises:
a first rotation shaft, the first drive member being drivingly connected to the first rotation shaft;
a first driving synchronous wheel mounted on the first rotation shaft and configured to rotate synchronously with the first rotation shaft;
a first mounting shaft, the first mounting shaft and the first rotation shaft being spaced apart in the vertical direction;
a first driven synchronous wheel mounted on the first mounting shaft and configured to rotate about the first mounting shaft; and
a first synchronous belt wound around the first driving synchronous wheel and the first driven synchronous wheel, wherein a plurality of the mounting plates spaced equidistantly along a belt extension direction are provided on an outer side of the first synchronous belt; and
the second belt transmission assembly comprises:
a second rotation shaft, both ends of the rotation transmission assembly being respectively connected to the first rotation shaft and the second rotation shaft;
a second driving synchronous wheel mounted on the second rotation shaft and configured to rotate synchronously with the second rotation shaft;
a second mounting shaft, the second mounting shaft and the second rotation shaft being spaced apart in the vertical direction;
a second driven synchronous wheel mounted on the second mounting shaft and configured to rotate about the second mounting shaft; and
a second synchronous belt wound around the second driving synchronous wheel and the second driven synchronous wheel, wherein a plurality of the mounting plates spaced equidistantly along a belt extension direction are provided on an outer side of the second synchronous belt.

9. The lifter according to claim 8, wherein
the rotation transmission assembly comprises:
a first right-angle connector, a power input end of the first right-angle connector being connected to the first rotation shaft;
a connecting shaft, one end of the connecting shaft being connected to a power output end of the first right-angle connector; and
a second right-angle connector, a power input end of the second right-angle connector being connected to another end of the connecting shaft, and a power output end of the second right-angle connector being connected to the second rotation shaft.

10. The lifter according to claim 9, wherein
the first right-angle connector and the first rotation shaft are connected by a male-female fit; and
the second right-angle connector and the second rotation shaft are connected by a clamping mechanism.

11. The lifter according to any one of claims 1 to 10, wherein
the component to be transferred comprises an empty tray not carrying an object or a loaded tray carrying an object, the object comprising a battery component; and
the lifting mechanism for performing the lifting operation is used to lift the loaded tray, and the lifting mechanism for performing the lowering operation is used to lower the empty tray; or
the lifting mechanism for performing the lifting operation is used to lift the empty tray, and the lifting mechanism for performing the lowering operation is used to lower the loaded tray.

12. The lifter according to claim 2, wherein
each of the lifting mechanisms has input portions and output portions spaced apart in the vertical direction, wherein a pushing mechanism is provided corresponding to each of the output portions, and the pushing mechanism is capable of extending along the second direction into the receiving space that has moved to the output portion to push the component to be transferred out of the receiving space.

13. The lifter according to claim 12, wherein the pushing mechanism comprises:
a pushing mounting seat;
a second drive member mounted on the pushing mounting seat;
a telescopic mounting seat connected to an output end of the second drive member, the second drive member being capable of driving the telescopic mounting seat to move reciprocally along the second direction;
a third drive member mounted on the telescopic mounting seat; and
a pushing member connected to an output end of the third drive member, the third drive member being capable of driving the pushing member to move reciprocally along the vertical direction, wherein
the third drive member drives the pushing member to descend to a side area adjacent to the receiving space at the output portion, and the second drive member drives the pushing member to move along the second direction into the receiving space at the output portion to push the component to be transferred out of the receiving space.

14. The lifter according to claim 13, wherein the pushing member comprises:
a main body portion connected to the output end of the third drive member; and
two pushing portions respectively connected to both ends of the bottom of the main body portion, wherein the pushing portion comprises a pushing surface for abutting against and pushing the component to be transferred.

15. The lifter according to any one of claims 12 to 14, wherein
an output mechanism is provided corresponding to each of the output portions, the output mechanism having a conveying path extending along the second direction, and the conveying path of the output mechanism being arranged close to the output portion corresponding to the output mechanism, and
the pushing mechanism corresponding to the output portion is capable of pushing the component to be transferred at the output portion to the conveying path of the output mechanism corresponding to the output portion.

16. The lifter according to any one of claims 12 to 15, wherein
an input mechanism is provided corresponding to each of the input portions, the input mechanism being capable of inputting the component to be transferred along the second direction into the receiving space that has moved to the input portion.

17. The lifter according to claim 16, wherein
the input mechanism has a conveying path extending along the second direction, the conveying path of the input mechanism being arranged close to the input portion corresponding to the input mechanism.

18. A battery production line, comprising:
a manufacturing machine, the manufacturing machine being configured to manufacture battery components;
a battery assembly device configured to assemble batteries using the battery components; and
the lifter according to any one of claims 1 to 17; wherein
at least one of the lifting mechanisms of the lifter performs a lifting operation or a lowering operation on a loaded tray carrying the battery components to transfer the loaded tray to the battery assembly device, and at least one of the lifting mechanisms of the lifter performs a lowering operation or a lifting operation on an empty tray removed from the battery assembly device to transfer the empty tray to the manufacturing machine.

19. A lifting method, wherein a lifter is used to lift a plurality of components to be transferred and lower another plurality of components to be transferred, and the lifter comprises at least two lifting mechanisms, at least one of the lifting mechanisms being configured to perform a lifting operation for lifting a component to be transferred, at least one of the lifting mechanisms being configured to perform a lowering operation for lowering a component to be transferred, and the lifting operation and the lowering operation being able to be performed simultaneously; wherein the lifting mechanism comprises a power assembly and a carrier assembly, the carrier assembly being connected to the power assembly, and the power assembly being capable of driving the carrier assembly to ascend or descend, wherein the carrier assembly comprises a plurality of rollers, tops of the plurality of rollers being configured to carry the component to be transferred; through the rollers rotating in a same direction, the component to be transferred is able to move in a direction perpendicular to a rotation axis of the rollers while contacting the tops of the rollers; and the carrier assembly further comprises: a mounting member, the mounting member being connected to an output end of the power assembly, and the power assembly being capable of driving the mounting member to ascend or descend; and a plurality of one-way rotation connectors, wherein the one-way rotation connectors are individually mounted on the mounting member, the rollers are connected to the one-way rotation connectors in a one-to-one correspondence, and the roller is capable of rotating in one direction relative to the mounting member through the one-way rotation connector; and
the lifting method comprises:
a feeding step: inputting a component to be transferred onto the rollers of the lifting mechanism for performing the lifting operation, and inputting another component to be transferred onto the rollers of the lifting mechanism for performing the lowering operation; and
a lifting step: using the lifting mechanism for performing the lifting operation to lift the carried component to be transferred, and using the lifting mechanism for performing the lowering operation to lower the carried component to be transferred.

20. The lifting method according to claim 19, wherein
each of the lifting mechanisms has input portions and output portions spaced apart in the vertical direction, with an input mechanism provided corresponding to each of the input portions, and
the feeding step comprises:
a placing step: placing the component to be transferred at an input end of the input mechanism;
a conveying step: conveying the component to be transferred to an output end of the input mechanism by the input mechanism; and
a transfer step: conveying the component to be transferred at the output end of the input mechanism onto the rollers of the carrier assembly by the input mechanism.

21. The lifting method according to claim 19 or 20, wherein the component to be transferred comprises an empty tray not carrying an object or a loaded tray carrying an object, the object comprising a battery component; and
in the lifting step, the lifting mechanism for performing the lifting operation lifts the carried loaded tray, and the lifting mechanism for performing the lowering operation lowers the carried empty tray; or
the lifting mechanism for performing the lifting operation lifts the carried empty tray, and the lifting mechanism for performing the lowering operation lowers the carried loaded tray.

22. The lifting method according to any one of claims 19 to 21, wherein after the lifting step, the method further comprises:
a discharging step: pushing, by the lifting mechanism for performing the lifting operation, the component to be transferred that has been lifted into position off the rollers and out of the lifting mechanism, and pushing, by the lifting mechanism for performing the lowering operation, the component to be transferred that has been lowered into position off the rollers and out of the lifting mechanism.

23. The lifting method according to claim 22, wherein each of the lifting mechanisms has input portions and output portions spaced apart in the vertical direction, with a pushing mechanism and an output mechanism provided corresponding to each of the output portions, and
the discharging step comprises:
a pushing step of, when the carrier assembly moves to the output portion, pausing the driving of the power assembly, and using the pushing mechanism to push the component to be transferred in the receiving space of the carrier assembly to a conveying path of the output mechanism; and
an output step of using the output mechanism to convey the component to be transferred out of the lifting mechanism.
